Europäisches Patentamt

**European Patent Office**

Office européen des brevets

(19)

(11) Publication number: **0 134 644**

A1

(12) **EUROPEAN PATENT APPLICATION**

(21) Application number: **84304470.2**

(22) Date of filing: **29.06.84**

(51) Int. Cl.⁴: **C 22 B 19/26**
**C 01 G 9/06**
**//C25C1/16**

(30) Priority: **08.07.83 AU 205/83**

(43) Date of publication of application:
**20.03.85 Bulletin 85/12**

(84) Designated Contracting States:
**BE DE FR IT NL**

(71) Applicant: **ELECTROLYTIC ZINC COMPANY OF AUSTRALASIA LIMITED**
**390 Lonsdale Street**
**Melbourne Victoria(AU)**

(72) Inventor: **Adams, Robert William**
**194 Mary's Hope Road**
**Rosetta Tasmania(AU)**

(72) Inventor: **Chapman, Ross Londsay**
**46 Bathurst Street**
**Cobar New South Wales(AU)**

(72) Inventor: **Martin, Gregory John**
**5 Short Street Glebe**
**Hobart Tasmania(AU)**

(74) Representative: **Spencer, Graham Easdale et al,**
**A.A. Thornton & CO Northumberland House 303-306,**
**High Holborn**
**London WC1V 7LE(GB)**

(54) **Process for the purification of zinc sulphate solutions.**

(57) A method of purifying a zinc sulphate solution from an electrolytic zinc plant to precipitate the impurities copper, cadmium, cobalt and nickel by cementation with zinc dust is characterised by contacting the said solution with a solid (hereinafter referred to as the absorbent) possessing at least one of the properties of adsorption and absorption, before said cementation with zinc dust.

EP 0 134 644 A1

Croydon Printing Company Ltd

- 1 -

## Process for the purification of zinc sulphate solutions

This invention is concerned with the removal of impurities from aqueous zinc sulphate solutions and,more particularly, with the purification of impure zinc sulphate solutions such as those generated in an electrolytic zinc plant prior to the recovery of zinc therefrom by electrolysis.

The hydrometallurgical process for recovery of zinc from roasted zinc sulphide concentrates requires that the zinc sulphate leach liquor generated in the process must be of a very high purity before an electrowinning operation can be carried out efficiently and economically. The common dissolved metallic impurity elements present in the leach liquor, such as copper,cadmium,cobalt and nickel, can be very effectively removed by addition of zinc dust to the impure solution, this process being known as cementation.

We have now developed a method of enhancing the efficiency of the cementation process. The treatment according to the invention may be carried out prior to the cementation process or between two stages of a multi-stage cementation process.

According to the present invention there is provided a method of purifying an impure zinc sulphate solution from an electrolytic zinc plant of certain dissolved metals, such as copper,cadmium,cobalt and nickel,by cementation with zinc dust, characterized by a step in which the impure solution is

0134644

contacted with a solid prior to purification by cementation with zinc dust, the said solid possessing at least one of the properties of adsorption and absorption. Hereinafter the said solid is referred to as the absorbent.

The invention may include any of the following preferred embodiments.

* the amount of absorbent used lies in the range 100 milligrams to 10 grams per litre of impure zinc sulphate solution.

* the step incorporates two stages, the impure solution being contacted with the absorbent in the first stage, followed by a second stage in which the absorbent is separated from the said solution.

* the absorbent is contacted with the said solution at a temperature not exceeding the boiling point of the solution at atmospheric pressure.

* the absorbent is contacted with the said solution for no longer than 2 hours.

* the absorbent is contacted with the said solution in at least one of the following vessels: stirred tank reactor, fluidized bed reactor, static bed reactor, and a moving bed reactor wherein the bed moves either continuously or intermittently.

* after contact with the said solution the loaded absorbent is separated from the solution by at least one of the following means: filtration, centrifugation, classification, settling and thickening.

* the absorbent consists of at least one member of the group: activated carbon, carbon, diatomaceous earth, bentonite, limestone, basic zinc sulphate, metal hydroxide precipitate.

* the absorbent removes organic compounds from the said solution.

* the absorbent removes inorganic ions from the said solution.

* the absorbent acts as a carrier to remove particulate material from the said solution.

* the absorbent acts as a carrier to remove colloidal material from the said solution.

* contact of the absorbent with the said solution is made prior to the first stage of a multi-stage cementation process.

* contact of the absorbent with the said solution is made between two stages of a multi-stage cementation process.

* the absorbent is contacted with the said solution in a batchwise fashion.

* the absorbent is contacted with the said solution in a continuous fashion.

* the absorbent is contacted with the said solution in a counter-current fashion.


Background to the Invention

The hydrometallurgical process for recovery of zinc from roasted zinc sulphide concentrates requires that the zinc sulphate leach liquor generated in the process must be of a very high purity before an electrowinning operation can be carried out efficiently and economically. The common dissolved metallic impurity elements present in the leach liquor such as copper, cadmium, cobalt and nickel can be very effectively removed by addition of zinc dust to the impure solution, in a process known as cementation. The term "zinc dust" is used hereinafter to describe zinc powder or other

JW

particulate zinc which contains a significant concentration of metallic zinc either with or without accompanying:

(a)      zinc oxide;

(b)      other metals such as lead, copper, or cadmium, or

(c)      other contaminants, present in lesser concentration than the metallic zinc.

The previously mentioned elements, which are more electropositive than zinc, are displaced from solution with the formation of a precipitate called a cementate. The ease with which cementation can be carried out depends on the impurity element being removed, and it is well known that cobalt, in particular, is difficult to remove with zinc dust unless an activating agent such as antimony or arsenic is also present. The use of two additives together has proved very effective. For example, the use of arsenic with copper to facilitate cobalt removal is disclosed in B.P. 126,296, and, more recently, the use of antimony and cadmium together in solution to aid cobalt and nickel removal is disclosed in Aust. Patent 90737/82. The cementation step may contain more than one stage, with different elements being removed to varying extents in each of the stages of the cementation step.

Cementation is regarded essentially as an electrochemical process whereby the impurity metal is displaced from solution by an equivalent quantity of the less electropositive metal and both anodic and cathodic sites must exist near or on the precipitant surface. The structure of the deposit often determines the areas of these sites and therefore the kinetics of the reaction. The nature of the surface deposit obtained during a cementation reaction is similar to that produced during an electrolytic deposition process, but in cementation

JW

reactions the current density is not an independent variable so that the reaction rate is more often influenced by the deposit. For example, a dendritic deposit will enhance the kinetics of the reaction, while conversely, a tight coherent deposit would impede ionic diffusion and reduce the reaction rate.

Chemicals that are capable of modifying the surface structure of electrolytic deposits would therefore be expected to have an influence on cementation kinetics.

An organic chemical that is sometimes employed to improve the morphology of electrodeposited zinc is 2-naphthol. Unless rapidly destroyed, traces of this compound or its decomposition products could also contaminate solution entering the cementation step.

An additional group of chemicals that are very commonly used in hydrometallurgy are flocculants. Although mostly used to aid the thickening property of pulps, flocculants also have been found to improve the quality of zinc electro-deposits under certain circumstances. It is unlikely that all the flocculant added to various sections of an electrolytic zinc plant to aid solids settling will be totally entrained in solids discarded from the circuit, for example, as leach residues. In many cases flocculants are constructed of high molecular weight polymeric chains and are inherently difficult to destroy chemically or physically. Therefore it might be expected that there will always exist a low concentration, for example 0.01 to 10 ppm, of flocculant in many solutions in an electrolytic zinc plant. Therefore it is possible that the performance of the cementation step could be affected by flocculants added elsewhere in the electrolytic zinc plant circuit.

0134644

Flocculants have been added to a cementation process to ensure the cementation of smooth-surfaced particles which do not adhere to each other and from which gas bubbles are easily detached (Australian patent 473,591). Other surface-active agents have also been used to stabilize zinc dust cementates (German patent 1,023,229). It would therefore be expected that 2-naphthol, flocculants, and their decomposition products would have a benign effect on cementation. Surprisingly this is not the case.

Detailed Description of the Invention

The applicants have found that the presence of certain organic impurities in an impure zinc sulphate solution subsequent to the neutral leach stage severely retards the rate of removal of copper, cobalt and cadmium during cementation with zinc dust. Addition of a finely-divided solid such as ground limestone or activated carbon to remove these organic impurities by absorption leads to significant improvements in the rates of cementation of cobalt, cadmium, and nickel. The present invention is based on this discovery.

The inhibiting effect of very small concentrations of flocculant on the removal of copper, cobalt, and cadmium in a two stage zinc dust cementation step (see Aust. Patent 90737/82) is shown in Examples 1 and 2. In the second stage both non-ionic and anionic polyacrylamide flocculants slow the rate of cobalt removal while the anionic flocculant appears to inhibit cadmium removal. In the first stage (Example 1), the anionic flocculant decreases the rates of copper precipitation and cadmium reversion or resolution to a small extent. The flocculants used were polyacrylamide materials manufactured by Allied Colloids under the

JW

Magnafloc brand. "Magnafloc" is a registered Trade Mark. The non-ionic flocculant used was Magnafloc R-351, while the anionic flocculant used was Magnafloc R-155.

The removal of flocculant with a finely divided solid absorbent results in a significant improvement in cementation. This is one feature of the present invention. It is shown in Example 3 that the removal of flocculant with activated carbon results in an improvement in the rate of cobalt removal.

Other finely divided solids that may be used to remove flocculant include ground limestone and basic zinc sulphate, as shown in Example 4, although these absorbents were not as effective as activated carbon and are required in greater quantities. This is another feature of the present invention.

The above list of absorbents is not limiting as other absorbents, for example bentonite and diamtomaceous earth, may also be used for the same purpose.

Other organic contaminants, such as 2-naphthol or its derivatives which would be expected to have a similar effect as flocculants on cementation kinetics, are also removed by a similar treatment. This is a further feature of the present invention.

The benefit of activated carbon pre-treatment has also been demonstrated during continuous pilot plant operation of a two-stage zinc dust cementation section (Example 5). This work also showed clearly that lower final nickel concentrations could be achieved as well as significant reductions in the cobalt and cadmium concentrations. This is a further feature of the present invention.

The results of small scale electrodeposition tests on pilot plant solutions from the two-stage zinc dust cementation section indicate that a significant improvement in current efficiency can be expected when

JW

the solution is treated with activated carbon prior to cementation (Example 5). This is another very advantageous feature of the present invention.

The pilot plant tests have also shown that treatment with activated carbon and subsequent filtration resulted in significant removal of residual iron from the neutral leach liquor and a decrease in the iron level in the final purified solution prior to electrolysis. This is another feature of the present invention.

By removing flocculant it is possible to use less zinc dust for the same degree of cementation of the dissolved metals. Thus, as shown in Example 6, if R-155 flocculant is present in solution at a level of 3 ppm, and the solution is not pre-treated with activated carbon, more than twice the amount of zinc dust (and antimony) would be necessary to achieve the same final concentrations of cobalt and cadmium. This is a further important feature of the present invention.

Flocculant levels as low as 0.3 ppm also produce a significant detrimental effect on cobalt purification, which can be overcome by an activated carbon treatment (see Example 7). This is a further feature of the present invention.

The beneficial effect of activated carbon treatment can also be demonstrated for alternative zinc dust purification procedures. In Examples 8(a) - 8(d) four different procedures were tested on solution to which known amounts of flocculants were added and the degree of cobalt removal was measured in the presence and absence of an activated carbon pre-treatment. In each case the removal of cobalt is improved when the solution is reacted first with activated carbon and filtered. It is important to note that, even when very fine zinc dust is used, the rate of cobalt removal is greater when the solution containing the flocculant is also treated with activated carbon prior to purification (see Example
8(c)). The general application of the process to zinc
dust purification methods employed by the majority of the
World's zinc producers is an important feature of the
present invention.


Examples

The process of the present invention is
illustrated by the following non-limiting examples.

Solutions used in the laboratory batch tests
were produced during operation of a 0.5 tonne of zinc per
day capacity pilot plant (the design and operation of
this plant is described by I.G. Matthew, C.J. Haigh and
R.V. Pammenter in a paper entitled "Initial Pilot
Evaluation of the Low-contaminant Jarosite Process"
presented at the Third International Hydrometallurgical
Symposium, 112th AIME Annual Meeting, Atlanta, Georgia,
U.S.A., 6 March, 1983). As part of the pilot plant
operation a new improved two-stage zinc dust cementation
step (Aust. Patent 90737/82) was tested. The use of
finely divided activated carbon to remove impurities
prior to this step was also tested in the plant on a
continuous basis and the current efficiency for zinc
electrodeposition from solution so produced was measured
in small scale electrolytic cells.


Example 1

This example illustrates the adverse effect
that flocculant exerts on the decopperization stage
(first stage) of the cementation process described in
Australian Patent 90737/82.

In this stage copper is precipitated from
solution and cadmium, which precipitates initially,
reverts and completely re-enters solution. Zinc dust (-
25 mesh Tyler, 0.228 gram/litre) was reacted batchwise

JW

with a stirred neutral leach thickener overflow solution (4 litres) at 85$^O$C for 1 hour.  The results obtained are shown below for reaction in the presence and absence of 3 ppm of Magnafloc R-155 flocculant.

| Test No. | Flocculant Present | Time (Minutes) | Solution Composition (mg/L) | |
|---|---|---|---|---|
| | | | Cu | Cd |
| 1 | No | 0 | 205 | 300 |
| | | 5 | 125 | 230 |
| | | 10 | 65 | 260 |
| | | 15 | 28 | 270 |
| | | 30 | 12 | 290 |
| | | 60 | 11 | 300 |
| 2 | Yes | 0 | 205 | 300 |
| | | 5 | 170 | 245 |
| | | 10 | 105 | 230 |
| | | 15 | 70 | 260 |
| | | 30 | 32 | 280 |
| | | 60 | 31 | 285 |

Example 2

This example illustrates the detrimental effect of the anionic polyacrylamide flocculant Magnafloc R-155, present in very low concentrations, on the removal of cobalt and cadmium from solution.  The cementation procedure used is that based on the cadmium- and antimony-activated zinc dust cementation process that is described in Australian Patent Application 90737/82.

JW

For each of Test Nos. 1-6, listed below, decopperized solution (4 litres) was treated with 15 millilitres of zinc plant spent electrolyte to achieve a pH25$^O$ of 4.0 and then with potassium antimonyl tartrate to give an antimony concentration of 1 mg/L. Zinc dust containing a significant concentration of lead (0.8% Pb, 2 g/L) was reacted with this agitated solution (4 litres) at 75$^O$C for 1.5 hours and samples were withdrawn for analysis at 0.5 hour intervals. Stock flocculant solution was prepared as a 0.1% solution in water and added in appropriate amounts.

JW

| Test No. | R-155 Addition (ppm) | Time (Minutes) | Solution Composition (mg/L) | |
|---|---|---|---|---|
| | | | Co | Cd |
| 1 | 0 | 0 | 19.0 | 270 |
| | | 30 | 10.0 | 0.7 |
| | | 60 | 8.4 | - |
| | | 90 | 5.5 | 0.4 |
| 2 | 1 | 30 | 11.2 | 1.3 |
| | | 60 | 11.2 | 3.5 |
| | | 90 | 10.8 | 2.0 |
| 3 | 2 | 30 | 8.9 | 0.7 |
| | | 60 | 6.9 | 2.4 |
| | | 90 | 8.1 | 1.8 |
| 4 | 5 | 30 | 12.6 | 1.6 |
| | | 60 | 10.4 | 1.7 |
| | | 90 | 15.3 | 4.1 |
| 5 | 10 | 30 | 12.6 | 1.6 |
| | | 60 | 11.1 | 1.9 |
| | | 90 | 17.9 | 2.0 |
| 6 | 5 (R-351) | 30 | 16.6 | 0.15 |
| | | 60 | 13.8 | 0.30 |
| | | 90 | 13.4 | 0.30 |

Example 3

This example demonstrates the significant improvement in cementation that can be achieved by treating solution that contains 3 ppm of Magnafloc R-155 flocculant with activated carbon before carrying out the cementation.

JW

| Test No. | Activated Carbon, dry (mg/L) | Time (Minutes) | Solution Composition (mg/L) | |
|---|---|---|---|---|
| | | | Co | Cd |
| 1 | 0 | 0 | 26 | 290 |
| | | 30 | 15.1 | 0.03 |
| | | 60 | 11.4 | 0.20 |
| | | 90 | 9.6 | 0.23 |
| 2 | 114 | 30 | 15.0 | 1.0 |
| | | 60 | 11.7 | 1.1 |
| | | 90 | 10.1 | 0.25 |
| 3 | 200 | 30 | 7.9 | 0.20 |
| | | 60 | 4.3 | 0.10 |
| | | 90 | 3.1 | 0.15 |
| 4 | 300 | 30 | 7.2 | 0.60 |
| | | 60 | 3.6 | 0.35 |
| | | 90 | 4.6 | – |

In Test Nos. 1-4 listed above, Magnafloc R-155 flocculant (3 ppm) was added to decopperized solution (4 litres) and activated carbon was contacted with this solution at room temperature for 0.25 hours. After removal of the loaded carbon by filtration the cobalt and cadmium were cemented with zinc dust, as described in

JW

Example 2.   The activated carbon used was approximately 81% -200 mesh Tyler and was obtained as a screened byproduct from a paper manufacturer.

A coarser grade of carbon from the same source (55% -200 mesh Tyler) was also effective in removing flocculant as shown by the results of subsequent cementation tests given below.

| Test No. | Coarse Activated Carbon, dry (mg/L) | Time (Minutes) | Solution Composition (mg/L) during subsequent zinc dust cementation | |
|---|---|---|---|---|
| | | | Co | Cd |
| 1 | 200 | 0 | 20 | 233 |
| | | 30 | 13.2 | 0.1 |
| | | 60 | 8.6 | 0.1 |
| | | 90 | 7.0 | 1.6 |
| 2 | 300 | 30 | 7.3 | 1.1 |
| | | 60 | 4.7 | 0.7 |
| | | 90 | 3.3 | 0.5 |

Example 4

This example shows the beneficial effect of adding a mild neutralizing agent such as limestone or basic zinc sulphate as alternative absorbents for flocculants.

In Test Nos. 1-5, neutralizing agent was reacted with a neutral leach solution to which a known amount of flocculant had been added for 1 hour at 75$^{\circ}$C

0134644

and the resulting pulp cooled to 35°C before filtration. This procedure also removed the majority of the copper so that a standard second stage cementation, as described in Example 2, could then be carried out directly on the filtered solution. The limestone and basic zinc sulphate used were samples obtained from the selective zinc precipitation stage of the Risdon plant of the Electrolytic Zinc Company of Australasia Ltd. Addition of limestone, only, (Tests 3 and 4) would also result in some insitu formation of basic zinc sulphate.

| Test No. | Neutralizing Agent (g/L) | R-155 (ppm) | Time (Minutes) | Solution Composition (mg/L) | |
|---|---|---|---|---|---|
| | | | | Co | Cd |
| 1 | 0 | 3 | 0 | 25.0 | 270 |
| | | | 30 | 21.3 | 0.3 |
| | | | 60 | 19.4 | 0.6 |
| | | | 90 | 18.8 | 0.5 |
| 2 | 0 | 0 | 0 | 23.0 | 285 |
| | | | 30 | 12.6 | 0.2 |
| | | | 60 | 6.3 | 0.2 |
| | | | 90 | 4.5 | 0.2 |
| 3 | Limestone (7.5) | 3 | 30 | 12.3 | 0.15 |
| | | | 60 | 8.6 | 0.8 |
| | | | 90 | 7.0 | 0.25 |
| 4 | Limestone (10.0) | 3 | 30 | 9.2 | 0.7 |
| | | | 60 | 8.6 | 0.6 |
| | | | 90 | 6.2 | 0.55 |
| 5 | Basic Zinc Sulphate (7.7) | 3 | 30 | 15.4 | 0.15 |
| | | | 60 | 10.1 | 0.15 |
| | | | 90 | 7.4 | 0.1 |

Example 5

The zinc dust cementation section of the pilot plant was operated for periods with and without an activated carbon pre-treatment stage and the extent of metal cementation over the second stage reactors was monitored. All other operating conditions were kept as close as possible over the two periods. Metal levels quoted below are averages of measurements taken every 8 hours.

| Time of Continuous Operation (days) | Activated Carbon (mg/L) | Zinc Dust (g/L) | Solution Composition (mg/L) | | | | | | | | | | | |
|---|---|---|---|---|---|---|---|---|---|---|---|---|---|---|
| | | | Impure Solution | | Reactor 1 | | Reactor 2 | | Reactor 3 | | Final Filtrate | | | |
| | | | Co | Cd | Co | Cd | Co | Cd | Co | Cd | Co | Cd | Cu | Ni |
| 3 | 0 | 2.5 | 18 | 240 | 14.4 | 4.2 | 9.9 | 0.70 | 8.5 | 1.5 | 8.6 | 1.2 | <.03 | 0.55 |
| 6 | 200 | 2.6 | 20 | 230 | 8.1 | 5.1 | 3.0 | 0.78 | 2.5 | 0.67 | 2.2 | 0.3 | <.04 | 0.11 |

Fine activated carbon was metered as a slurry in water to neutral leach liquor and agitated at room temperature in a single stirred reactor with a nominal retention time of 50 minutes. After filtration of the loaded carbon on a plate and frame filter press the solution was decopperized by addition of a 1.4 x stoichiometric quantity of zinc dust at 85°C in a series of three reactors. After filtration of the copper-rich product, further zinc dust (2.0 g/L) and Sb (1 to 2 mg/L) was added and cobalt, cadmium, nickel and remaining traces of copper were removed in the second stage at 75°C in a series of three reactors followed by another filter press. An additional 0.5 to 0.6 g/L of zinc dust was

JW

added to the final reactor.  Deliberate additions of flocculant were not made during this test but both Magnafloc R-155 and R-351 flocculants were routinely used in preceding sections of the pilot plant to assist in settlement of solids.

Test electrolyses of the final solution from the cementation section produced with the activated carbon treatment step in operation were conducted in pilot electrolytic cells using a current density of 500 amp/m$^2$ and a deposition time of 48 hours.  The deposited zinc showed excellent physical properties and optimum crystal morphology as well as being deposited with an overall average current efficiency of 94.5 to 95%.  This value exceeds the best current efficiencies obtained on present Risdon Zinc Plant cell feed solutions which lie in the range of 90 to 93%.

Example 6

This example shows that the harmful effect of flocculant can be partly overcome by employing increased levels of zinc dust and antimony.  More importantly, it shows that if the activated carbon treatment step is not used more than twice the amount of zinc dust (and antimony) would be necessary to achieve the same final concentrations of cobalt and cadmium.

JW

| Test No. | R-155 (ppm) | Fine Activated Carbon | Zinc Dust (g/L) | Sb (mg/L) | Time (Minutes) | Solution Composition (mg/L) | |
|---|---|---|---|---|---|---|---|
| | | | | | | Co | Cd |
| 1 | 3 | 0 | 2.0 | 1.0 | 0 | 19.0 | 233 |
| | | | | | 30 | 15.1 | 0.3 |
| | | | | | 60 | 13.1 | 0.35 |
| | | | | | 90 | 12.1 | 0.45 |
| 2 | 3 | 0 | 4.0 | 2.0 | 30 | 12.6 | 0.15 |
| | | | | | 60 | 8.9 | 0.15 |
| | | | | | 90 | 7.2 | 0.20 |
| 3 | 3 | 200 | 2.0 | 1.0 | 30 | 7.9 | 0.25 |
| | | | | | 60 | 4.3 | 0.20 |
| | | | | | 90 | 3.1 | 0.10 |

These tests were conducted batchwise as described for Example 2.

Example 7

The following tests show that flocculant levels as low as 0.3 ppm have a detrimental effect on cobalt removal during the second stage of the process according to Australian Patent Application No. 90737/82. Treatment of the solution which a known amount of flocculant had been added before purification results in an improvement in the subsequent rate of cobalt removal.

| Test No. | R-155 Addition (ppm) | Activated Carbon Treatment (300 mg/L) | Time (Minutes) | Cobalt Level During Second Stage Purification (mg/L) | $10^2 \times k_{Co}$ (min$^{-1}$) |
|---|---|---|---|---|---|
| 1 | 0.3 | No | 0 | 20.0 | |
| | | | 30 | 17.2 | |
| | | | 60 | 8.7 | |
| | | | 90 | 8.7 | |
| | | | 180 | 7.9 | |
| | | | | | 0.99 |
| 2 | 0.3 | Yes | 0 | 24.7 | |
| | | | 30 | 8.9 | |
| | | | 60 | 3.5 | |
| | | | 90 | 3.1 | |
| | | | 180 | 2.0 | |
| | | | | | 3.25 |

Example 8

The following tests show that flocculant also has a harmful effect on alternative zinc dust processes for the removal of cobalt, and that the addition of activated carbon is again effective in removing the flocculant and restoring purification efficiency

(a)     Treatment according to process described in Australian Patent 498,044.  Zinc dust (0.8% Pb) 2 g/L, Sb 1 mg/L, Cu 20 mg/L, copper- and cadmium-purified solution 4 L, Magnafloc R-155 flocculant 3 ppm, 75°C.

| Time | Cobalt Concentration (mg/L) | |
|---|---|---|
| | No Activated Carbon Treatment | Activated Carbon Pre-Treatment (300 mg/L) |
| 0 | 26.3 | 26.3 |
| 10 | 24.4 | 22.9 |
| 30 | 21.6 | 18.8 |
| 60 | 20.7 | 15.5 |
| 120 | 19.0 | 12.8 |
| 180 | 20.1 | 12.3 |
| $10^2 \times k_{Co}$ (min$^{-1}$) | 0.65 | 1.10 |

(b)   Treatment according to the process described in Canadian Patent 1,046,288.

JW

| Stage* | Zinc Dust (g/L) | Sb (mg/L) | Temp. (°C) | Time (Min.) | Cobalt Concentration (mg/L) | |
|---|---|---|---|---|---|---|
| | | | | | No Activated Carbon Pre-Treatment | With Activated Carbon Pre-Treatment (300 mg/L) |
| 1 | Recycled Cementate | 1.0 | 85 | 0 | 16.0 | 16.0 |
| | | | | 10 | 10.1 | 10.0 |
| | | | | 30 | 5.8 | 5.5 |
| | | | | 60 | 5.1 | 3.3 |
| | | | | 120 | 4.4 | 2.3 |
| | | | | 150 | 3.7 | 2.8 |
| 2 | 4.0 | 0.5 | 75 | 0 | 16.0 | 16.0 |
| | | | | 5 | 3.6 | 2.2 |
| | | | | 15 | 3.7 | 1.7 |
| | | | | 30 | 2.9 | 1.2 |
| | | | | 60 | 1.4 | 0.6 |
| | | | | 120 | 0.6 | 0.2 |

\* This process is operated in two or three stages with recycle of cementate between stages. The cementate used in Stage 1 was made by treating a solution of similar composition to that used in Stage 2 with zinc dust (0.8% Pb, 4 g/L) and antimony (0.5 mg/L) at 75°C for 2 hours. In Stage 2 fresh dust was reacted with the solution from Stage 1 from which the solids had been removed by decantation of the supernatant

JW

liquor after settling. Magnafloc R-155 flocculant (3 ppm) was added to each fresh batch of solution used.

(c)     Treatment according to the process described in Australian Patent 465,511.  Zinc dust (0.7% Pb), 2.5 g/L, Sb 1 mg/L, copper- and cadmium-purified solution, 4 L, Magnafloc R-155 flocculant (3 ppm), 85°C.

|  | Cobalt Concentration (mg/L) | |
|---|---|---|
| Time (Minutes) | No Activated Carbon Pre-Treatment | With Activated Carbon Pre-Treatment (300 mg/L) |
| 0 | 19.0 | 19.0 |
| 10 | 13.4 | 10.4 |
| 30 | 5.4 | 3.4 |
| 60 | 1.9 | 0.6 |
| 120 | 0.4 | 0.2 |
| 180 | 0.3 | 0.2 |
| $10^2 \times k_{Co}$ (min$^{-1}$) | 3.89 | 5.73 |

(d)     Treatment according to the process described in Australian Patent 499,355.

In this process a relatively large quantity of arsenic is added with the zinc dust to form metal arsenides.  These compounds are recycled

JW

- 23 -

and used to precipitate further cobalt.  The following simulation of this procedure was carried out:

Zinc dust (0.8% Pb) (2 g/L), $Cu^{2+}$ (100 mg/L) and As (100 mg/L, as $As_2O_3$), were added to a zinc plant containing Magnafloc R-155 flocculant (3 ppm), $Cd^{2+}$ (270 mg/L), and $Co^{2+}$ (12 mg/L).  After 1 hour reaction at 75°C the solids were allowed to settle, the supernatant liquor was decanted and 4 L of fresh impure solution containing the same level of flocculant was added with the same amount of zinc dust and arsenic and the reaction was repeated.  This procedure was repeated 3 times and the solution was analyzed at the conclusion of each cycle.  After the second cycle the copper addition was eliminated.  The above series of experiments were then repeated using solution to which a known amount of flocculant had been added and then treated with activated carbon.

The results are summarized below.

| Cycle No. | Zinc Dust (g/L) | Cu²⁺ Addition (mg/L) | Cobalt Level (mg/L) | |
|---|---|---|---|---|
| | | | No Activated Carbon Pre-Treatment | With Activated carbon Pre-Treatment (300 mg/L) |
| 1 | 2.0 | 100 | 4.9 | 0.1 |
| 2 | 2.0 | 100 | 3.4 | 0.7 |
| 3 | 2.0 | – | 5.9 | 0.2 |
| 4 | 1.0 | – | 8.2 | 3.5 |
| 5 | 1.0 | – | 8.6 | 7.4 |

With the exception of Examples 7 and 8(c), the sizing of the zinc dust used was 90% -65 mesh Tyler, with an average particle diameter of 65 μm. In Examples 7 and 8(c) the zinc dust was considerably finer with a median particle diameter of 9.7 μm. similar to that in use at the Balen-Wezel plant of Societe des Mines et Fonderies de Zinc de la Vieille Montagne, Societe Anonyme.

The activated carbon used in Examples 7 and 8(a) – 8(d) was the coarse grade material (55% -200 mesh Tyler). It was added to the solution to which the flocculant had been added previously at a level of 300 mg/L, stirred with the solution for 15 minutes at room temperature, and then removed by filtration.

JW

Claims:

1.   A method of purifying a zinc sulphate solution from an electrolytic zinc plant by precipitating copper, cadmium, cobalt and nickel impurities therefrom by cementation with zinc dust, in which the solution is contacted with a solid which is adsorptive and/or absorptive (hereinafter referred to as the absorbent) before the cementation with zinc dust.

2.   A method according to claim 1, in which the amount of absorbent used is from 100 milligrams to 10 grams per litre of the sulphate solution.

3.   A method according to claim 1 or 2, in which the absorbent is contacted with the solution at a temperature not exceeding the boiling point of the solution at atmospheric pressure.

4.   A method according to any of claims 1 to 3, in which the absorbent is contacted with the said solution for no longer than 2 hours.

5.   A method according to any of claims 1 to 4, in which the absorbent is contacted with the solution in a first stage followed by a second stage in which the absorbent is separated from the solution.

6.   A method according to any of claims 1 to 5, in which the absorbent is one or more of activated carbon, carbon, diatomaceous earth, bentonite, limestone, basic zinc sulphate, or metal hydroxide precipitate.

7.   A method according to any of claims 1 to 6, in which the absorbent removes organic compounds from the solution.

8.    A method according to any of claims 1 to 7,
in which the absorbent removes inorganic ions from the
solution.

9.    A method according to any of claims 1 to 8, in
which the absorbent acts as a carrier to remove
colloidal material from the solution.

10.    A method according to any of claims 1 to 9, in
which the absorbent acts as a carrier to remove
particulate material from the solution.

## DOCUMENTS CONSIDERED TO BE RELEVANT

EP 84304470.2

| Category | Citation of document with indication, where appropriate, of relevant passages | Relevant to claim | CLASSIFICATION OF THE APPLICATION (Int. Cl.4) |
|---|---|---|---|
| X | DE - B - 1 210 990 (DUISBURGER KUPFERHÜTTE)<br><br>* Claims; examples *<br><br>-- | 1-10 | C 22 B 19/26<br><br>C 01 G 9/06<br><br>//C 25 C 1/16 |
| X | US - A - 3 826 648 (BODSON)<br><br>* Claim 1; column 3, lines 51-59 *<br><br>-- | 1,3,6-10 | |
| Y | CA - A - 1 133 229 (KERBY)<br><br>* Claim 1 *<br><br>-- | 1 | |
| Y | GB - A - 331 886 (SOCIETE MINIERE)<br><br>* Claims 1,3 *<br><br>-- | 1,6 | |
| A | CA - A - 1 133 228 (KERBY)<br><br>* Claim 1 *<br><br>-- | 1 | **TECHNICAL FIELDS SEARCHED (Int. Cl.4)**<br><br>C 22 B |
| A | US - A - 1 733 676 (STEVENS, NORRIS, WATSON)<br><br>* Claim 1 *<br><br>-- | 1 | C 01 G<br>C 25 C |
| A | US - A - 3 649 180 (MC KAY, LANDUCCI)<br><br>* Abstract *<br><br>---- | 1 | |

The present search report has been drawn up for all claims

| Place of search | Date of completion of the search | Examiner |
|---|---|---|
| VIENNA | 26-09-1984 | HÖPER |